# EUROPEAN PATENT SPECIFICATION

(11) **EP 1 746 775 B1**
(45) Date of publication and mention of the grant of the patent: **04.04.2012**
(21) Application number: 06012538.2
(22) Date of filing: 19.06.2006
(51) Int. Cl.: H04L 12/28, H04L 29/08

(54) **Connection of a portable terminal to a server**
Anbindung eines tragbaren Endgerätes an einen Server
Connexion d'un terminal portable à un serveur

(30) Priority: 20.07.2005 KR 20050065656
(43) Date of publication of application: 24.01.2007
(73) Proprietor: Samsung Electronics Co., Ltd., Suwon-si, Gyeonggi-Do (KR)
(72) Inventor: Kim, Hoe-Won, Seoul (KR)
(74) Representative: Grünecker, Kinkeldey, Stockmair & Schwanhäusser

(56) References cited:
- WO-A-2004/012420
- US-A1- 2004 005 862

## Description

This application claims priority to an application entitled "Portable Terminal With Improved Server Connecting Device And Method Of Connecting Portable Terminal To Server" filed in the Korean Intellectual Property Office on July 20, 2005 and assigned Serial No. 2005-65656.

The present invention relates to a portable terminal with an improved server connecting device and a method of connecting the portable terminal to the server, and more particularly, to a portable terminal including a communication unit for communicating with a server through an access point (AP), a server connecting unit for initiating a connection to the server, and a controller for automatically searching for the server via the AP using the communication unit, when the server connecting unit is operated.

With the rapid development of portable terminals, wireless voice communication and information exchange have become essential to the success of these portable terminals.

Early portable terminals were designed to be easy to carry and to provide wireless voice communication function. However, as cellular technologies developed and a wireless Internet was introduced, portable terminal functions expanded from the voice function to include a schedule management function, a picture taking function using a built-in digital camera, a satellite broadcasting reception function, a game function, a web surfing function, etc..

Specifically, in order to allow portable terminals to access the wireless Internet, portable terminals typically communicate with an access point (AP) that connects the portable terminals to a server via the Internet. That is, communication between the portable terminals and the server can be achieved through the AP.

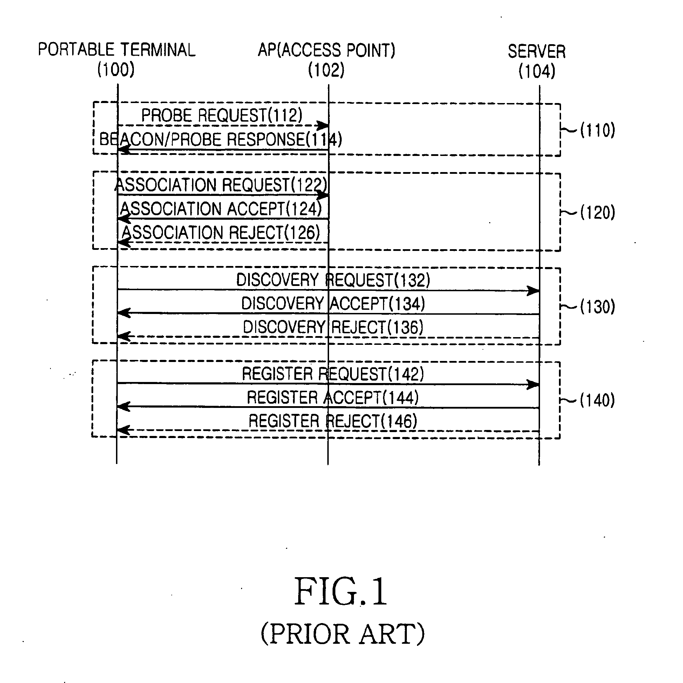

A wireless Internet communication method of a portable terminal will be described below with reference to FIG 1, which is a flow diagram illustrating a method of connecting a portable terminal to a server through an AP.

Referring to FIG. 1, the method of connecting a portable terminal 100 to a server 104 through an AP 102 includes an operation 110 of searching for the AP 102, an operation 120 of connecting the portable terminal 100 to the AP 102, an operation 130 of connecting the portable terminal 100 to a server 104, and an operation of authenticating the portable terminal 100.

In operation 110, the portable terminal 100 searches for the AP 102. Specifically, the portable terminal 100 transmits a probe request 112 to the AP 102, and the AP 102 transmits a probe response 114 to the portable terminal 100. Then, the portable terminal 100 searches for the AP 102 using the received probe response 114 (or a beacon 114) that is periodically transmitted from the AP 102.

In operation 120, after searching for the AP 102, the portable terminal 100 is connected to the AP 102. Specifically, the portable terminal 100 transmits an association request 122 to the AP 102 in order for the connection to the searched AP 102 to be established. When the portable terminal 100 is normally connected to the AP 102 that has received the association request 122, the AP 102 transmits an association accept 124. On the contrary, when the portable terminal 100 fails to connect to the AP 102, the AP 102 transmits an association reject 126 to the portable terminal 100 together with the reason for failure in the connection to the portable terminal 100.

In operation 130, when the portable terminal 100 is normally connected to the AP 102 in operation 120, the portable terminal 100 is connected to the server 104 through the AP 102. Specifically, the portable terminal 100 transmits a discovery request 132 to the server 104. If the connection is possible, the server 104 that has received the discovery requests 132 transmits a discovery accept 134 to the portable terminal 100. On the contrary, if the connection is impossible, the sever 104 transmits a discovery reject 136 to the portable terminal 100 together with a reason why the connection could not be established.

In operation 140, when the server 104 is normally connected to the portable terminal 100, the authentication is performed with respect to the use of the services of the server 104. Specifically, the portable terminal 100 transmits a register request 142 to the server 104, and the server 104 verifies whether the user is qualified. If the user is qualified, the server 104 transmits a register accept 144 to the portable terminal 100. On the contrary, if the user is not qualified, the server 104 transmits a register reject 146 to the portable terminal 100 and does not permit the services of the server 104.

Although the connection of the portable terminal 100 to the server 104 through the AP 102 has been described with reference to FIG. 1, a larger number of operations may be included depending on systems.

However, the respective operations 110, 120, 130, and 140 are not connected automatically, but, rather the user has to manipulate them. Also, the portable terminal may not be able to connect to the server 104 in a state that the portable terminal 100 is connected to the AP 102, or the portable terminal 100 may maintain the connection to the AP 102 even after the services are terminated.

These problems are exacerbated when the portable terminals are used for business purposes (e.g., such as in an enterprise environment). For example, a home-delivery company employee may use his portable terminal to check and/or update the status of mail (or packages) being delivered in real-time. Likewise, a salesman may use the portable terminal to check the stock kept in a main or zone office. Accordingly, these enterprises require access to one or more servers throughout the day.

Although the portable terminals used for business purposeare generally connected to several servers, the user's of these portable terminals must typically control a series of operations, including searching for an AP, connecting to the AP, connecting to a server, and authenticating the portable terminal. Having to perform these steps manually, wastes the user's time, and can inconvenience the user. In addition, in the case of the portable terminal for business purposes, when the services of the servers limited to business purposes are terminated or the portable terminal cannot be connected to the servers, the portable terminal need not maintain the connection to the AP. However, the conventional connecting method has a problem in that the mobile terminal still maintains the connection to the AP even when the portable terminal is disconnected from the server or cannot be connected to the server.

US 2004/0005862 A describes a control information originating apparatus originating information to an information terminal. The apparatus includes a controller configured to request to establish wireless communication connection with the information terminal, and a processing unit configured to transmit control information for controlling the information terminal to the information terminal when the communication connection is established.

WO 2004/012420 A relates to the reception and display of multimedia news in real time. It is described that when closing the main window of an application, one disconnects himself from a central server.

It is the object of the present invention to provide a method and apparatus for improved server connection operation of a portable terminal.

This object is solved by the subject matter of the independent claims.

Preferred embodiments are defined in the dependent claims.

An aspect of the present invention is to substantially solve at least the above problems and/or disadvantages and to provide at least the advantages below. The present invention provides a portable terminal that can automatically perform the connection to a server.

It is a further aspect of the present invention to provide a portable terminal that uses only a previously designated server so as to receive the previously designated services.

It is an additional aspect of the present invention to provide a portable terminal and a method of connecting the portable terminal to a server, in which the portable terminal is disconnected from an AP, when the portable terminal is disconnected from the server or fails to connect to the server.

According to an aspect of the present invention, there is provided a portable terminal including a communication unit for communicating with a server through an (access point) AP, a server connecting unit for initiating a connection to the server, and a controller for automatically searching for the server via the AP using the communication unit, when the server connecting unit is operated.

According to another aspect of the present invention, there is provided a method of connecting a portable terminal to a server, including initiating a connection to a server, automatically searching for an (access point) AP and connecting the portable terminal to the searched AP, and automatically searching and connecting to a previously designated server, when the portable terminal is connected to the AP.

### BRIEF DESCRIPTION OF THE DRAWINGS

The above and other aspects, features and advantages of the present invention will become more apparent from the following detailed description when taken in conjunction with the accompanying drawings in which:
FIG. 1 is a flow diagram illustrating a method of connecting a portable terminal to a server through an AP;
FIG. 2 is a block diagram illustrating a portable terminal with a server connecting device according to the present invention; and
FIG 3 is a flowchart illustrating a method of connecting a portable terminal with an improved server connecting device to a server according to the present invention.

### DETAILED DESCRIPTION OF THE PREFERRED EMBODIMENT

Reference will now be made in detail to the preferred embodiments of the present invention, examples of which are illustrated in the accompanying drawings. A detail description of well-known features will be omitted for conciseness.

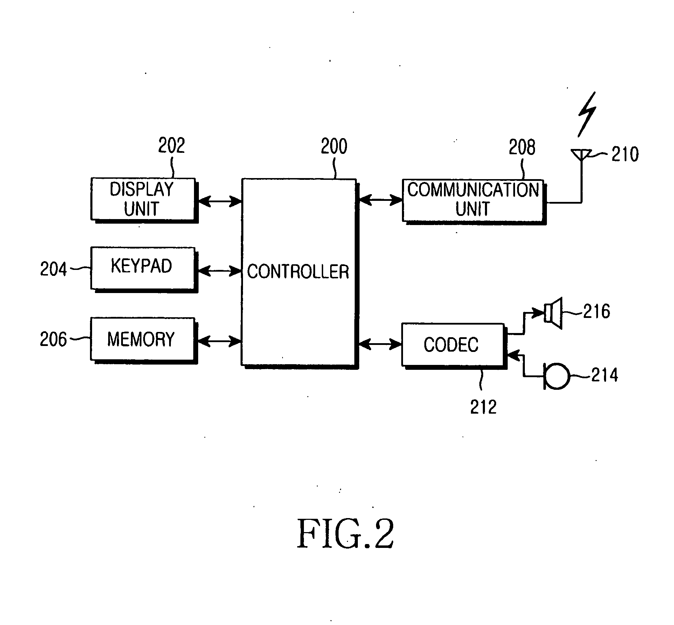

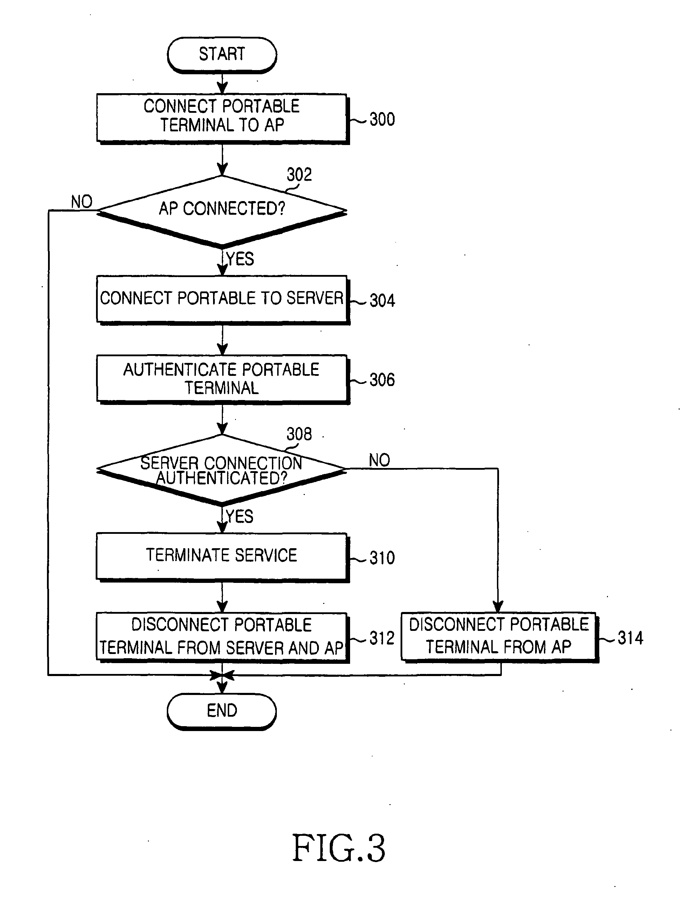

A portable terminal with an improved server connecting device and a method of connecting the portable terminal to the server according to the present invention will be described below in detail with reference to FIGs. 2 and 3.

FIG. 2 is a block diagram of a portable terminal with a server connecting device according to the present invention.

Referring to FIG. 2, the portable terminal of the present invention includes a controller 200, a display unit 202, a keypad 204, a memory 206, a communication unit 208, an antenna 210, a coder-decoder (CODEC) 212, a microphone 214, and a speaker 216.

The controller 200 controls an overall operation of the portable terminal. For example, the controller 200 processes and controls a voice communication and a data communication. When a server connecting is initiated, the controller 200 automatically searches a server through an AP and connects the portable terminal to the communication unit 208 through the AP. In addition, when the connection to the server is terminated or fails, the controller 200 automatically disconnects the portable terminal from the AP. A detailed description about the general process and control operations of the controller 200 will be omitted for conciseness.

The server connecting is initiated by a server connecting unit. The server connecting unit which initiates the connection to the server may be a button of the keypad 204 or a portion of touch screen of the display unit 202.

The display unit 202 displays status information (or indicators) generated during the operation of the portable terminal. The display unit 202 can display numerals and characters, optional moving pictures and still pictures, and so on. A color liquid crystal display (LCD) may be used for the display unit 202. A portion of touch screen of the display unit 202 can be used as the server connecting unit. If the portion of touch screen of the display unit 202 predetermined as the server connecting unit is touched, server connecting is initiated

The keypad 204 includes alphabetic and/or numeric keys (e.g., digits 0-9 and/or characters a-z, etc.) and a plurality of function keys, such as a Menu key, a Cancel (Delete) key, a Conformation key, a Talk key, an End key, an Internet connection key, and Navigation keys (e.g., ▲/▼/◄/►). A button of the key pad 204 can be used as the server connecting unit. If the button of the key pad 204 predetermined as the server connecting unit is pressed, server connecting is initiated. The keypad 204 also provides the controller 202 with a key input data corresponding to a key pressed by the user.

The memory 206 stores a program for controlling an overall operation of the portable terminal. Also, the memory 206 temporarily stores data generated during operations and stores data such as telephone numbers, SMS messages, and picture data. In addition to the general functions, the memory 206 stores authentication information that will be authenticated by the server.

Upon a reception operation, the communication unit 208 performs a despreading and a channel decoding of a received signal by down-converting a frequency of an RF signal received through the antenna 210. Upon a transmission operation, the communication unit 208 performs a channel coding and a spreading of data, up-converts a frequency of the channel-coded and spread data, and transmits it through the antenna 210. Also, the communication unit 208 receives an identification number of a base station through a pilot channel and performs a despreading and a channel decoding of the received signal. Further, the communication unit 208 searches for and connects to an AP under control of the controller 200, and searches for and connects to a server, allowing data communication with the server. When the connection to the server is terminated and/or fails, the communication unit 208 terminates the connection to the AP.

The CODEC 212 connected to the controller 200, and the microphone 214 and the speaker 216 connected to the CODEC 212 serve as an audio input/output block for a voice communication. The CODEC 212 converts pulse code modulated (PCM) data provided from the controller 200 into analog audio signals. The analog audio signals are outputted through the speaker 216. Also, the CODEC 212 converts audio signals, received through the microphone 214, into PCM data and provides the PCM data to the controller 200.

Hereinafter, a short dial method of the portable terminal with the improved server connecting function will be described in detail with reference to FIG 3, which is a flowchart illustrating a method of connecting the portable terminal to the server according to the present invention.

In operation 300, an AP is searched for and a portable terminal is connected to the searched AP.

In operation 302, it is determined whether the portable terminal is connected to the AP. If it is determined that the portable terminal is not connected to the AP, the process is ended. However, as a result of the determination in operation 302, if it is determined that the portable terminal is normally connected to the AP, a previously designated server is searched for and the portable terminal is connected to this server in operation 304.

In operation 306, when the portable terminal is connected to the previously designated server, the portable terminal is authenticated by the server. In operation 308, it is determined whether the portable terminal is connected to the server and it is determined whether the portable terminal is authenticated by the server. In operation 310, when it is determined that the portable terminal is authenticated by the server in operation 308" the portable terminal receives the services from the server and then the services are terminated. In operation 312, when the services are terminated, the portable terminal is disconnected from the AP and the server.

However, when it is determined that the portable terminal is not connected to the server or it is not authenticated by the server in operation 308, the portable terminal is disconnected from the AP, in operation 314.

In connecting to the previously designated server, operations 300 to 304 or operations 300 to 306 in FIG 3 are automatically carried out.

In operation 306, the authentication can be automatically achieved by previously storing necessary information in the portable terminal, depending on the priority of the security, or can be achieved by a user's data input.

In addition, when the portable terminal uses the wireless Internet service, it is connected to, and communicates with, the previously designated server through the wireless Internet. When the AP is disconnected from the server, the portable terminal is automatically disconnected from the AP.

As described above, the portable terminal includes the communication unit for communicating with the server through the AP, the server connecting device for initiating a the connection to the server, and the controller for automatically searching for the server through the communication unit over the AP when the server connecting unit is operated. All operations until the portable terminal is connected to the server automatically carried out, thereby providing convenience to the user. Also, when the portable terminal is disconnected from the server or fails to connect to the server, the portable terminal is also disconnected from the AP, thereby improving the utilization of the AP resource and reducing the power consumption of the portable terminal.

The foregoing embodiments are merely exemplary and are not to be construed as limiting the present invention. The present disclosure can be readily applied to other types of apparatuses. The description of the present invention is intended to be illustrative, and not to limit the scope of the claims. Many alternatives, modifications, and variations will be apparent to those skilled in the art.

## Claims

1. A portable terminal comprising:
a communication unit (208) for communicating with a server through an access point, AP;
a server connecting unit including at least one of a button of a keypad (204) or a portion of touch screen of a display unit (202) for initiating a connection to a previously designated server; and
a controller (200) for automatically searching for and connecting to the previously designated server using the communication unit via the AP, when the server connecting unit is operated, and for automatically disconnecting the portable terminal from the AP when the communication unit is disconnected from the previously designated server.

2. The portable terminal of claim 1, further comprising a memory (206) for storing authentication information, wherein when the portable terminal is connected to the previously designated server, the controller automatically transmits the authentication information to the previously designated server and is authenticated by the previously designated server.

3. The portable terminal of claim 1, further comprising a keypad (204) having a plurality of keys for inputting the authentication information, wherein when the portable terminal is connected to the previously designated server, the controller transmits the inputted authentication information to the previously designated server and is authenticated by the previously designated server.

4. The portable terminal of claim 1, the controller further adapted for automatically connecting the portable terminal to the AP through the communication unit, searching for the previously designated server through the AP, and connecting the portable terminal to the searched previously designated server.

5. The portable terminal of claim 1, the controller further adapted for automatically connecting the portable terminal to the AP through the communication unit and automatically disconnecting the portable terminal from the AP when the communication unit fails to connect to the previously designated server.

6. A method of connecting a portable terminal to a server, comprising:
initiating a connection to a previously designated server in response to operation of a server connecting unit including at least one of a button of a keypad (204) or a portion of touch screen of a display unit (202) of the portable terminal;
in response to the initiating, automatically searching (300) for an access point, AP, and connecting (300) the portable terminal to the searched AP; and
when the portable terminal is connected to the AP, automatically searching and connecting (304) to the previously designated server; and
disconnecting the portable terminal from the server; and
when the portable terminal is disconnected from the server, automatically disconnecting the portable terminal from the access point, AP.

7. The method of claim 6, further comprising when the portable terminal is connected to the previously designated server, automatically transmitting authentication information to the previously designated server and receiving an authentication.

8. The method of claim 6, further comprising:
when the portable terminal is connected to the previously designated server, inputting authentication information; and
transmitting the input authentication information to the previously designated server and receiving an authentication.

9. The method of claim 6, further comprising:
attempting to connect to the previously designated server in a state in which the portable terminal is connected to an AP; and
when the portable terminal fails to connect to the previously designated server, automatically disconnecting the portable terminal from the AP.

## Patentansprüche

1. Tragbares Endgerät, das umfasst:
eine Kommunikations-Einheit (208) zum Kommunizieren mit einem Server über einen Zugangspunkt;
eine Serververbindungs-Einheit, die wenigstens eine Taste einer Tastatur (204) oder einen Abschnitt eines berührungsempfindlichen Bildschirms einer Anzeige-Einheit (202) zum Einleiten einer Verbindung mit einem zuvor angegebenen Server enthält; und
eine Steuereinrichtung (200), mit der automatisch nach dem zuvor angegebenen Server gesucht und unter Verwendung der Kommunikations-Einheit über den Zugangspunkt Verbindung mit ihm hergestellt wird, wenn die Serververbindungs-Einheit betätigt wird, und mit der das tragbare Endgerät automatisch von dem Zugangspunkt getrennt wird, wenn die Kommunikations-Einheit von dem zuvor angegebenen Server getrennt wird.

2. Tragbares Endgerät nach Anspruch 1, die des Weiteren einen Speicher (206) zum Speichern von Authentifizierungsinformationen umfasst, wobei, wenn das tragbare Endgerät mit dem zuvor angegebenen Server verbunden wird, die Steuereinrichtung die Authentifizierungsinformationen automatisch zu dem zuvor angegebenen Server sendet und durch den zuvor angegebenen Server authentifiziert wird.

3. Tragbares Endgerät nach Anspruch 1, das des Weiteren eine Tastatur (204) mit einer Vielzahl von Tasten zum Eingeben der Authentifizierungsinformationen umfasst, wobei, wenn das tragbare Endgerät mit dem zuvor angegebenen Server verbunden wird, die Steuereinrichtung die Authentifizierungsinformationen zu dem zuvor angegebenen Server sendet und durch den zuvor angegebenen Server authentifiziert wird.

4. Tragbares Endgerät nach Anspruch 1, wobei die Steuereinrichtung des Weiteren so eingerichtet ist, dass sie das tragbare Endgerät über die Kommunikations-Einheit automatisch mit dem Zugangspunkt verbindet, über den Zugangspunkt nach dem zuvor angegebenen Server sucht und das tragbare Endgerät mit dem gesuchten, zuvor angegebenen Server verbindet.

5. Tragbares Endgerät nach Anspruch 1, wobei die Steuereinrichtung des Weiteren so eingerichtet ist, dass sie das tragbare Endgerät über die Kommunikations-Einheit automatisch mit dem Zugangspunkt verbindet und das tragbare Endgerät automatisch von dem Zugangspunkt trennt, wenn es der Kommunikations-Einheit nicht gelingt, Verbindung mit dem zuvor angegebenen Server herzustellen.

6. Verfahren zum Verbinden eines tragbaren Endgerätes mit einem Server, das umfasst:
Einleiten einer Verbindung mit einem zuvor angegebenen Server in Reaktion auf Betätigung einer Serververbindungs-Einheit, die wenigstens eine Taste einer Tastatur (204) oder einen Abschnitt eines berührungsempfindlichen Bildschirms einer Anzeige-Einheit (202) des tragbaren Endgerätes enthält;
in Reaktion auf das Einleiten automatisches Suchen (300) nach einem Zugangspunkt und Verbinden (300) des tragbaren Endgerätes mit dem gesuchten Zugangspunkt; und
wenn das tragbare Endgerät mit dem Zugangspunkt verbunden wird, automatisches Suchen des zuvor angegebenen Servers und Herstellen von Verbindung (304) mit ihm; und
Trennen des tragbaren Endgerätes von dem Server; und
wenn das tragbare Endgerät von dem Server getrennt wird, automatisches Trennen des tragbaren Endgerätes von dem Zugangspunkt.

7. Verfahren nach Anspruch 6, das des Weiteren umfasst, dass, wenn das tragbare Endgerät mit dem zuvor angegebenen Server verbunden wird, automatisch Authentifizierungsinformationen zu dem zuvor angegebenen Server gesendet werden und eine Authentifizierung empfangen wird.

8. Verfahren nach Anspruch 6, das des Weiteren umfasst:
wenn das tragbare Endgerät mit dem zuvor angegebenen Server verbunden wird, Eingeben von Authentifizierungsinformationen; und
Senden der eingegebenen Authentifizierungsinformationen zu dem zuvor angegebenen Server und Empfangen einer Authentifizierung.

9. Verfahren nach Anspruch 6, das des Weiteren umfasst:
versuchsweises Herstellen von Verbindung mit dem zuvor angegebenen Server in einem Zustand, in dem das tragbare Endgerät mit einem Zugangspunkt verbunden ist; und
wenn es dem tragbaren Endgerät nicht gelingt, Verbindung zu dem zuvor angegebenen Server herzustellen, automatisches Trennen des tragbares Endgerätes von dem Zugangspunkt.

## Revendications

1. Terminal portable comprenant :
une unité de communication (208) pour communiquer avec un serveur par l'intermédiaire d'un point d'accès, AP ;
une unité de connexion de serveur incluant au moins un élément parmi une touche d'un clavier (204) ou une partie d'écran tactile d'une unité d'affichage (202) pour initialiser une connexion avec un serveur désigné précédemment ; et
un contrôleur (200) pour rechercher automatiquement le serveur désigné précédemment et s'y connecter en utilisant l'unité de communication par l'intermédiaire de l'AP, lorsque l'unité de connexion de serveur est actionnée et pour déconnecter automatiquement le terminal portable de l'AP lorsque l'unité de communication est déconnectée du serveur désigné précédemment.

2. Terminal portable selon la revendication 1, comprenant en outre une mémoire (206) pour enregistrer des informations d'authentification, dans lequel lorsque le terminal portable est connecté au serveur désigné précédemment, le contrôleur transmet automatiquement les informations d'authentification au serveur désigné précédemment et est authentifié par le serveur désigné précédemment.

3. Terminal portable selon la revendication 1, comprenant en outre un clavier (204) comportant une pluralité de touches pour entrer les informations d'authentification, dans lequel lorsque le terminal portable est connecté au serveur désigné précédemment, le contrôleur transmet les informations d'authentification appliquées en entrée au serveur désigné précédemment et est authentifié par le serveur désigné précédemment.

4. Terminal portable selon la revendication 1, le contrôleur étant adapté en outre à connecter automatiquement le terminal portable à l'AP par l'intermédiaire de l'unité de communication, rechercher le serveur désigné précédemment par l'intermédiaire de l'AP et connecter le terminal portable au serveur recherché désigné précédemment.

5. Terminal portable selon la revendication 1, le contrôleur étant adapté en outre à connecter automatiquement le terminal portable à l'AP par l'intermédiaire de l'unité de communication et déconnecter automatiquement le terminal portable de l'AP lorsque l'unité de communication ne parvient pas à se connecter au serveur désigné précédemment.

6. Procédé de connexion d'un terminal portable à un serveur comprenant :
l'initialisation d'une connexion à un serveur désigné précédemment en réponse à l'actionnement d'une unité de connexion de serveur incluant au moins un élément parmi une touche d'un clavier (204) ou une partie d'écran tactile d'une unité d'affichage (202) du terminal portable ;
en réponse à l'initialisation, la recherche automatique (300) d'un point d'accès, AP, et la connexion (300) du terminal portable à l'AP recherché ; et
lorsque le terminal portable est relié à l'AP, la recherche automatique du serveur désigné précédemment et la connexion (304) à celui-ci ; et
la déconnexion du terminal portable du serveur ; et
lorsque le terminal portable est déconnecté du serveur, la déconnexion automatique du terminal portable du point d'accès, AP.

7. Procédé selon la revendication 6, comprenant en outre lorsque le terminal portable est connecté au serveur désigné précédemment, la transmission
automatique d'informations d'authentification au serveur désigné précédemment et la réception d'une authentification.

8. Procédé selon la revendication 6, comprenant en outre :
lorsque le terminal portable est connecté au serveur désigné précédemment, l'entrée d'informations d'authentification ; et
la transmission des informations d'authentification entrées au serveur désigné précédemment et la réception d'une authentification.

9. Procédé selon la revendication 6, comprenant en outre :
la tentative de connexion au serveur désigné précédemment dans un état dans lequel le terminal portable est connecté à un AP ; et
lorsque le terminal portable ne parvient pas à se connecter au serveur désigné précédemment, la déconnexion automatique du terminal portable de l'AP.
